(19) **Europäisches Patentamt**
**European Patent Office**
**Office européen des brevets**

(11) **EP 4 109 393 A1**

(12) **EUROPEAN PATENT APPLICATION**
published in accordance with Art. 153(4) EPC

(43) Date of publication:
**28.12.2022 Bulletin 2022/52**

(51) International Patent Classification (IPC):
***G06T 5/00*** *(2006.01)* ***G06K 9/00*** *(2022.01)*

(21) Application number: **21757807.9**

(22) Date of filing: **19.02.2021**

(86) International application number:
**PCT/CN2021/076840**

(87) International publication number:
**WO 2021/164725 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.02.2020 CN 202010108660**

(71) Applicant: **Huawei Technologies Co., Ltd.**
**Longgang**
**Shenzhen, Guangdong 518129 (CN)**

(72) Inventors:
• **LIU, Lin**
**Shenzhen, Guangdong 518129 (CN)**
• **YUE, Jun**
**Shenzhen, Guangdong 518129 (CN)**
• **LIU, Jianzhuang**
**Shenzhen, Guangdong 518129 (CN)**
• **YUAN, Shanxin**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD AND DEVICE FOR REMOVING MOIRÉ PATTERNS**

(57) This application provides a moire removal method and an apparatus, and relates to the field of artificial intelligence, and in particular, to the field of computer vision. The method includes: performing wavelet transform on a to-be-processed image to obtain a first wavelet image (S210); performing moire removal processing on the first wavelet image to obtain a second wavelet image (S220); and performing inverse wavelet transform on the second wavelet image to obtain a repaired image (S230) of the to-be-processed image. In the foregoing method, moires on the to-be-processed image are decomposed onto wavelet images with different frequencies by using wavelet transform, and then moire removal processing is separately performed on each wavelet image, to remove moires with different frequencies. This can more effectively remove moires and reduce loss of original details of the image.

S210: Perform wavelet transform on a to-be-processed image to obtain a first wavelet image

S220: Perform moire removal processing on the first wavelet image to obtain a second wavelet image

S230: Perform inverse wavelet transform on the second wavelet image to obtain a repaired image of the to-be-processed image

FIG. 2

EP 4 109 393 A1

# Description

This application claims priority to Chinese Patent Application No. 202010108660.7, filed with the China National Intellectual Property Administration on February 21, 2020 and entitled "MOIRE REMOVAL METHOD AND APPARATUS", which is incorporated herein by reference in its entirety.

## TECHNICAL FIELD

This application relates to the field of image processing, and in particular, to a moire removal method and an apparatus.

## BACKGROUND

Moires are often generated when a digital camera is used to photograph an object with dense textures such as clothing, a building, a roof, or a screen.

Currently, there are some moire removal methods in the industry. Most of these methods are: downsampling an image to obtain feature maps with different resolutions, and separately removing moires from the feature maps with different resolutions. This technology may lose original details of the image.

Therefore, it is a main bottleneck of this research direction to effectively remove moires and reduce loss of original details of an image.

## SUMMARY

This application provides a moire removal method and an apparatus, to effectively remove moires and reduce loss of original details of an image.

According to a first aspect, a moire removal method is provided. The method includes: performing wavelet transform on a to-be-processed image to obtain a first wavelet image; performing moire removal processing on the first wavelet image to obtain a second wavelet image; and performing inverse wavelet transform on the second wavelet image to obtain a repaired image of the to-be-processed image.

It should be understood that wavelet transform may decompose an input image into a series of wavelet images with different frequency content. In this application, wavelet transform is performed on the to-be-processed image, to obtain a plurality of wavelet images with different frequency content. In this application, moire removal processing needs to be performed on the plurality of wavelet images obtained after wavelet transform is performed on the to-be-processed image. Considering that operations of moire removal processing on each of the plurality of wavelet images are similar, for brevity of description, one wavelet image is used as an example for description in this specification. In other words, the first wavelet image mentioned in the first aspect represents any one of the plurality of wavelet images obtained after wavelet transform is performed on the to-be-processed image.

Wavelet transform may decompose the input image into the series of wavelet images with different frequency content. In other words, different wavelet images in the plurality of wavelet images obtained after wavelet transform is performed on the to-be-processed image express different frequency information. Therefore, a wavelet transform operation may decompose moires on the to-be-processed image onto wavelet images with different frequencies, and then moire removal processing is separately performed on each wavelet image, to remove moires with different frequencies. Compared with a conventional technology, this can effectively remove moires.

In addition, the moires on the to-be-processed image are decomposed onto the wavelet images with different frequencies by using wavelet transform, and then moire removal processing is separately performed on each wavelet image. In this way, details of some wavelet images without moire interference can be retained, so that image details can be retained. Therefore, compared with the conventional technology, this can reduce loss of original details of the image.

Therefore, in this application, moire removal is performed in a wavelet domain, to effectively remove moires and reduce loss of original details of the image.

Wavelet transform may be performed on the to-be-processed image in a plurality of manners.

Optionally, a Haar (Haar) wavelet is used as a type of wavelet transform.

Optionally, a type of wavelet transform performed on the to-be-processed image may be another type other than Haar wavelet transform.

With reference to the first aspect, in a possible implementation of the first aspect, the performing moire removal processing on the first wavelet image to obtain a second wavelet image includes: inputting the first wavelet image into a densely connected convolutional network, and performing moire removal processing on the first wavelet image by using the densely connected convolutional network, to obtain the second wavelet image.

Optionally, the densely connected convolutional network includes a densely connected convolutional module and an attention module. The attention module is configured to search for a direction of a moire. An output of the densely connected convolutional network is a function of a product of an output of the densely connected convolutional module and an output of the attention module.

In this application, the moire on the image is removed by using the densely connected convolutional network in the wavelet domain. This can effectively remove the moire.

With reference to the first aspect, in a possible implementation of the first aspect, the inputting the first wavelet image into a densely connected convolutional network, and performing moire removal processing on the first wavelet image by using the densely connected convolutional network, to obtain the second wavelet image includes: inputting the first wavelet image into a dual-branch subnetwork, and performing moire removal processing on the first wavelet image by using the dual-branch subnetwork, to obtain the second wavelet image. The dual-branch subnetwork includes the densely connected convolutional network and a dilated convolutional network. An input of the dual-branch subnetwork is an input of the densely connected convolutional network and an input of the dilated convolutional network. An output of the dual-branch subnetwork is a weighted sum of an output of the densely connected convolutional network and an output of the dilated convolutional network.

The densely connected convolutional network may obtain local information, and the dilated convolutional network may obtain information in a larger area. Therefore, the densely connected convolutional network and the dilated convolutional network are used together to remove the moire on the wavelet image, so that the densely connected convolutional network and the dilated convolutional network can complement each other, and a receptive field (receptive field) of the network can be enlarged. The receptive field represents a size of an area to which a pixel on a feature map at each layer in a convolutional neural network is mapped in an original image. It should be understood that, by enlarging the receptive field of the network, the moire can be removed in a larger area and to a greater extent, for example, a low-frequency moire can be removed.

With reference to the first aspect, in a possible implementation of the first aspect, the inputting the first wavelet image into a dual-branch network, and performing moire removal processing on the first wavelet image by using the dual-branch network, to obtain the second wavelet image includes: inputting the first wavelet image into a dual-branch network, and performing moire removal processing on the first wavelet image by using the dual-branch network, to obtain the second wavelet image. The dual-branch network includes a plurality of dual-branch subnetworks, and an output of a former one of two adjacent dual-branch subnetworks is an input of a latter one of the two adjacent dual-branch subnetworks.

Therefore, in this application, the densely connected convolutional network and the dilated convolutional network are used together to remove the moire on the wavelet image, so that the densely connected convolutional network and the dilated convolutional network can complement each other, and a receptive field (receptive field) of the network can be enlarged. This can remove the moire to a greater extent.

According to a second aspect, a data processing apparatus is provided. The apparatus includes the following units:
a wavelet transform unit, configured to perform wavelet transform on a to-be-processed image to obtain a first wavelet image; a moire removal unit, configured to perform moire removal processing on the first wavelet image to obtain a second wavelet image; and an inverse wavelet transform unit, configured to perform inverse wavelet transform on the second wavelet image to obtain a repaired image of the to-be-processed image.

With reference to the second aspect, in a possible implementation of the second aspect, the moire removal unit is configured to: input the first wavelet image into a densely connected convolutional network, and perform moire removal processing on the first wavelet image by using the densely connected convolutional network, to obtain the second wavelet image.

With reference to the second aspect, in a possible implementation of the second aspect, the moire removal unit is configured to: input the first wavelet image into a dual-branch subnetwork, and perform moire removal processing on the first wavelet image by using the dual-branch subnetwork, to obtain the second wavelet image.

The dual-branch subnetwork includes the densely connected convolutional network and a dilated convolutional network. An input of the dual-branch subnetwork is an input of the densely connected convolutional network and an input of the dilated convolutional network, and an output of the dual-branch subnetwork is a weighted sum of an output of the densely connected convolutional network and an output of the dilated convolutional network.

With reference to the second aspect, in a possible implementation of the second aspect, the moire removal unit is configured to: input the first wavelet image into a dual-branch network, and perform moire removal processing on the first wavelet image by using the dual-branch network, to obtain the second wavelet image.

The dual-branch network includes a plurality of dual-branch subnetworks. An output of a former one of two adjacent dual-branch subnetworks is an input of a latter one of the two adjacent dual-branch subnetworks.

With reference to the second aspect, in a possible implementation of the second aspect, the densely connected convolutional network includes a densely connected convolutional module and an attention module. The attention module is configured to search for a direction of a moire. The output of the densely connected convolutional network is a function of a product of an output of the densely connected convolutional module and an output of the attention module.

With reference to the second aspect, in a possible implementation of the second aspect, a type of wavelet transform performed by the wavelet transform unit on the to-be-processed image is Haar Haar wavelet transform.

According to a third aspect, a data processing apparatus is provided. The apparatus includes: a memory, configured to store a program; and a processor, configured to execute the program stored in the memory. When the program stored in the memory is executed, the processor is configured to perform the method according to the first aspect.

According to a fourth aspect, a computer-readable medium is provided. The computer-readable medium stores program code to be executed by a device, and the program code is used to perform the method according to the first aspect.

According to a fifth aspect, a computer program product including instructions is provided. When the computer program product runs on a computer, the computer is enabled to perform the method according to the first aspect.

According to a sixth aspect, a chip is provided. The chip includes a processor and a data interface. The processor reads, through the data interface, instructions stored in a memory, to perform the method according to the first aspect.

Optionally, in an implementation, the chip may further include the memory. The memory stores the instructions. The processor is configured to execute the instructions stored in the memory. When the instructions are executed, the processor is configured to perform the method according to the first aspect.

According to a seventh aspect, an electronic device is provided. The electronic device includes the data processing apparatus according to the fourth aspect or the fifth aspect.

Based on the foregoing description, in this application, moire removal is performed in a wavelet domain, to effectively remove moires and reduce loss of original details of an image. In addition, a densely connected convolutional network and a dilated convolutional network are used together to remove moires on a wavelet image. This can further effectively remove the moire.

**BRIEF DESCRIPTION OF DRAWINGS**

FIG. 1 is a schematic diagram of moires;
FIG. 2 is a schematic flowchart of a moire removal method according to an embodiment of this application;
FIG. 3 and FIG. 4 are schematic diagrams of wavelet transform;
FIG. 5 is a schematic diagram of a structure of a densely connected convolutional network according to an embodiment of this application;
FIG. 6 is a schematic diagram of a structure of a dual-branch subnetwork according to an embodiment of this application;
FIG. 7 is a schematic diagram of a structure of a dilated convolutional network according to an embodiment of this application;
FIG. 8 is a schematic diagram of a structure of a dual-branch network according to an embodiment of this application;
FIG. 9 is a schematic block diagram of a moire removal apparatus according to an embodiment of this application;

FIG. 10 is a schematic block diagram of a moire removal system according to an embodiment of this application;
FIG. 11 is another schematic block diagram of a moire removal apparatus according to an embodiment of this application; and
FIG. 12 is a schematic diagram of a hardware structure of a chip according to an embodiment of this application.

**DESCRIPTION OF EMBODIMENTS**

The following describes technical solutions of this application with reference to accompanying drawings.

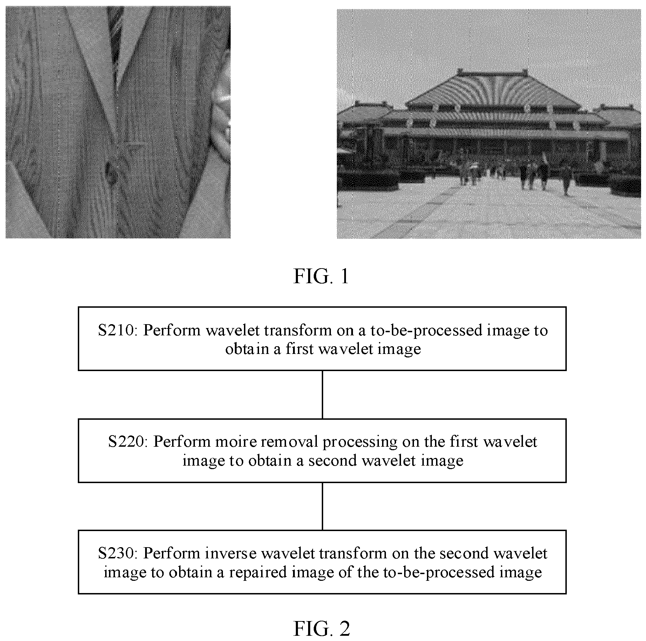

Moires are often generated when a digital camera is used to photograph an object with dense textures, such as clothing, a building, or a screen. The left side of FIG. 1 shows moires generated when clothing is photographed, and the right side of FIG. 1 shows moires generated when a building is photographed.

Currently, there are some methods for moire removal in the industry. In these methods, moires are removed in an RGB domain, and moires are not well distinguished from useful textures of an image. In addition, in most of these methods, feature maps with different resolutions are obtained by downsampling an image, and moires are removed from the feature maps with different resolutions. This technology may lose original details of the image to some extent, for example, high-frequency details.

Therefore, it is a main bottleneck of this research direction to cleanly remove moires and protect original textures of the image.

For the foregoing problem, this application provides a moire removal method. Moire removal is performed in a wavelet domain, to effectively remove moires and reduce loss of original details of the image.

This application may be applied to any scenario in which moires on an image need to be removed. For example, this application may be applied to a scenario in which a screen needs to be photographed, such as OCR text recognition and target recognition on the screen. For another example, this application may be applied to a scenario in which moires on a photographed object with dense textures need to be removed during photographic image processing (specifically, line aliasing and color artifacts represented by the moires are removed). After an input image is processed by using the moire removal method provided in this application, an image without a moire may be obtained. A subsequent operation may be performed on the image, for example, an operation such as image target recognition.

By way of example, and not limitation, this application may be applied to the following application scenario 1 and application scenario 2.

Application scenario 1: OCR text recognition and object recognition on a screen

When a camera of a mobile device such as a mobile phone or a tablet performs OCR recognition on a screen-type text, or recognizes a category of an object of an image on the screen, moires greatly interfere with accuracy of text recognition or object recognition. To accurately identify categories of the text and the object, an obtained image is first preprocessed and moire removal is performed. Then, the subsequent identification operation is performed.

Application scenario 2: photographic image processing

In a daily photographing scenario, a building and clothing often occur. There is also a high probability that moires are generated. As shown in FIG. 1, a task of a moire removal algorithm is to assist image processing personnel to automatically remove moires generated in a daily photographing process.

FIG. 2 is a schematic flowchart of a moire removal method according to an embodiment of this application. The method includes the following steps S210, S220, and S230.

S210: Perform wavelet transform on a to-be-processed image to obtain a first wavelet image.

The to-be-processed image represents an image from which moires need to be removed, for example, images shown on the left and right in FIG. 1.

For example, the to-be-processed image is an RGB image.

The first wavelet image represents an image obtained by performing wavelet transform on the to-be-processed image.

It should be understood that wavelet transform may decompose an input image into a series of wavelet images with different frequency content.

In step S210, wavelet transform is performed on the to-be-processed image, to obtain a plurality of wavelet images with different frequency content. In this embodiment of this application, moire removal processing needs to be performed on the plurality of wavelet images obtained after wavelet transform is performed on the to-be-processed image. Considering that operations of moire removal processing on each of the plurality of wavelet images are similar, for brevity of description, one wavelet image is used as an example for description in this specification. In other words, the first wavelet image in this embodiment of this application represents any one of the plurality of wavelet images obtained after wavelet transform is performed on the to-be-processed image.

S220: Perform moire removal processing on the first wavelet image to obtain a second wavelet image.

The second wavelet image represents the first wavelet image obtained after the moire is removed.

It should be understood that "first" in the first wavelet image and "second" in the second wavelet image are merely distinguished for ease of description, and are not intended to limit the scope of this embodiment of this application.

In step S220, the moire on the first wavelet image may be removed by using a neural network model. The neural network model is obtained by training to remove moires on a wavelet image.

S230: Perform inverse wavelet transform on the second wavelet image to obtain a repaired image of the to-be-processed image.

Inverse wavelet transform in step S230 is inverse transform of wavelet transform in step S210.

It can be learned that step S220 is performed in a wavelet domain. To be specific, in this embodiment of this application, a moire removal operation is performed in the wavelet domain.

As described above, wavelet transform may decompose the input image into the series of wavelet images with different frequency content. In other words, different wavelet images in the plurality of wavelet images obtained after wavelet transform is performed on the to-be-processed image express different frequency information. Therefore, a wavelet transform operation may decompose moires on the to-be-processed image onto wavelet images with different frequencies, and then moire removal processing is separately performed on each wavelet image, to remove moires with different frequencies. Compared with the conventional technology, this can effectively remove moires.

In addition, the moires on the to-be-processed image are decomposed onto the wavelet images with different frequencies by using wavelet transform, and then moire removal processing is separately performed on each wavelet image. In this way, details of some wavelet images without moire interference can be retained, so that image details can be retained. Therefore, compared with the conventional technology, this can reduce loss of original details of the image.

Therefore, in this embodiment of this application, moire removal is performed in the wavelet domain, to effectively remove moires and reduce loss of original details of the image.

In step S210, wavelet transform (wavelet transform) is used, and in step S230, inverse wavelet transform is used. A type of wavelet transform (and a corresponding inverse wavelet transform) is not limited in this application. For example, in step S210, wavelet transform may be performed on the to-be-processed image by using any existing feasible wavelet transform method.

For example, in a process of wavelet transform, a type of wavelet transform and a required transform parameter need to be obtained. In a process of inverse wavelet transform, a type of inverse wavelet transform and a required transform parameter need to be obtained. For example, in step S210, a type of wavelet transform and a required transform parameter may be obtained from a wavelet transform repository. In step S230, a type of inverse wavelet transform and a required transform parameter may be obtained from an inverse wavelet transform repository.

Optionally, a type of wavelet transform is Haar (Haar) wavelet transform.

For example, in step S210, Haar wavelet transform is performed on the to-be-processed image, and in step S230, inverse Haar wavelet transform is performed on the second wavelet image.

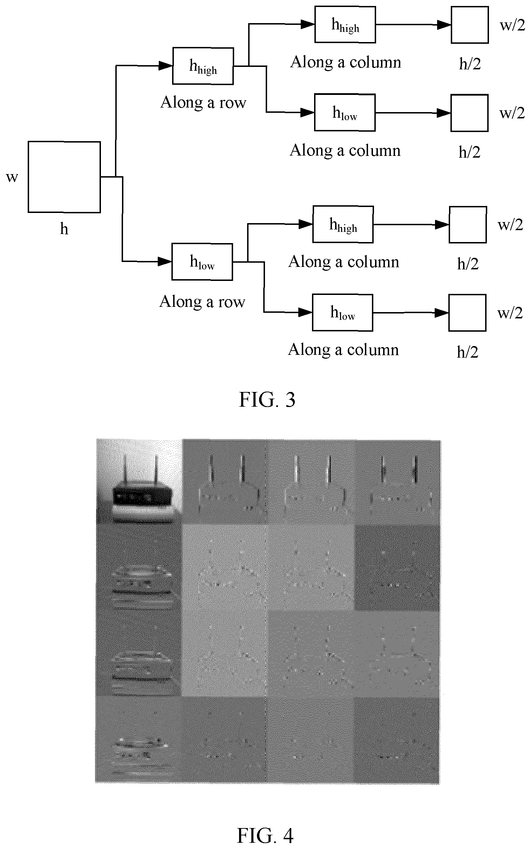

Haar wavelet transform is a two-dimensional (2D) fast wavelet transform (fast wavelet transfer, FWT). By way of example, and not limitation, the following describes a method for performing Haar wavelet transform on a to-be-processed image. In the following example, the to-be-processed image is an input image whose size is w×h shown in FIG. 3, where w represents a width, and h represents a height.

A Haar wavelet transform algorithm repeatedly applies low-pass and high-pass decomposition filters and downsampling to calculate wavelet coefficients, where the low-pass filter is $=\left(\dfrac{1}{\sqrt{2}},\dfrac{1}{\sqrt{2}}\right)$ and the high-pass filter is $=\left(\dfrac{1}{\sqrt{2}},-\dfrac{1}{\sqrt{2}}\right)$. In a Haar wavelet transform process at each layer, one image is converted into two images by applying a high-pass filter and a low-pass filter along rows of the image, and then the same filter is applied to the two images along columns of the image. A total of four wavelet images are obtained, as shown in FIG. 3.

For example, if the input image is an image including three RGB channels, 3×4=12 images may be obtained by using one wavelet transform. For example, if a quantity of layers of wavelet transform may be 2, the input image is a 3-channel RGB image. After 2-layer wavelet transform, each channel may be decomposed into 16 wavelet images at different levels. FIG. 4 is an image (that is, a wavelet image) obtained after two-layer wavelet transform is performed on a single-channel input image. Therefore, N=3 × 16=48 wavelet images can be obtained from a 3-channel RGB input image. In this way, a space size (h×h×3) of the original image is reduced by a quarter, and a size of the output wavelet image is ((h/4)×(h/4)×48). It should be understood that the first wavelet image in embodiments of this application corresponds to any one of the 16 wavelet images or any one of the 48 wavelet images in this example.

It should be understood that a Haar wavelet transform method is simple and effective. In this embodiment, wavelet transform is performed on a processed image by using Haar wavelet transform, so as to improve efficiency of moire removal.

In step S220, moires on the first wavelet image may be removed by using a neural network model. The neural network model is obtained by training to remove moires on a wavelet image. In other words, the neural network model is trained to remove moires from an image in a wavelet domain.

For a determined training objective, how to specifically train a neural network model is not a study of this application, and may be implemented by using any existing feasible neural network training method. This is not limited in this application.

For example, a neural network model used for removing the moire from the first wavelet image is a deep convolutional neural network.

Optionally, in step S220, the moire on the first wavelet image is removed by using a densely connected convolutional network (densely connected convolutional networks).

For example, in step S220, the first wavelet image is input into a densely connected convolutional network, and moire removal processing is performed on the first wavelet image by using the densely connected convolutional network, to obtain the second wavelet image.

The densely connected convolutional network includes a densely connected module (dense block), and the densely connected module may also be referred to as a densely connected convolutional block. An existing method may be used for designing the densely connected convolutional network. This is not limited in this application.

Optionally, the densely connected convolutional network includes a densely connected convolutional module and an attention module. The attention module is configured to search for a direction of a moire. An output of the densely connected convolutional network is a function of a product of an output of the densely connected convolutional module and an output of the attention module.

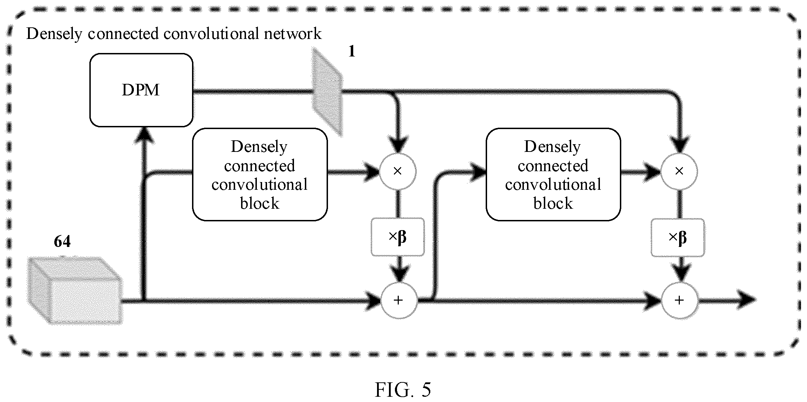

A structure of the densely connected convolutional network is shown in FIG. 5. As shown in FIG. 5, the densely connected convolutional network has two densely connected convolutional blocks (dense block). For example, each dense block may have five convolutional layers. In a same dense block, an input of a current layer includes outputs of all previous layers. As shown in FIG. 5, the densely connected convolutional network further has an attention (direction perception module, DPM) module. The DPM module is an attention module configured to search for a direction of a moire fringe. An output of the DPM is multiplied by an output of each dense block, and then multiplied by a coefficient $\beta$. Finally, the result is added to the input. For example, a value of $\beta$ is 0.2.

It should be understood that, the moire is removed by using the densely connected convolutional network, so that information about a close-range moire can be effectively captured.

Optionally, in step S220, the densely connected convolutional network (densely connected convolutional networks) and a dilated convolutional (dilated convolution) network are used together to remove the moire on the first wavelet image.

By way of example, and not limitation, in this specification, a network including one densely connected convolutional network and one dilated convolutional network is referred to as a dual-branch subnetwork.

For example, in step S220, the first wavelet image is input into a dual-branch subnetwork, and moire removal processing is performed on the first wavelet image by using the dual-branch subnetwork, to obtain the second wavelet image. The dual-branch subnetwork includes the densely connected convolutional network and a dilated convolutional network. An input of the dual-branch subnetwork is an input of the densely connected convolutional network and an input of the dilated convolutional network, and an output of the dual-branch subnetwork is a weighted sum of an output of the densely connected convolutional network and an output of the dilated convolutional network.

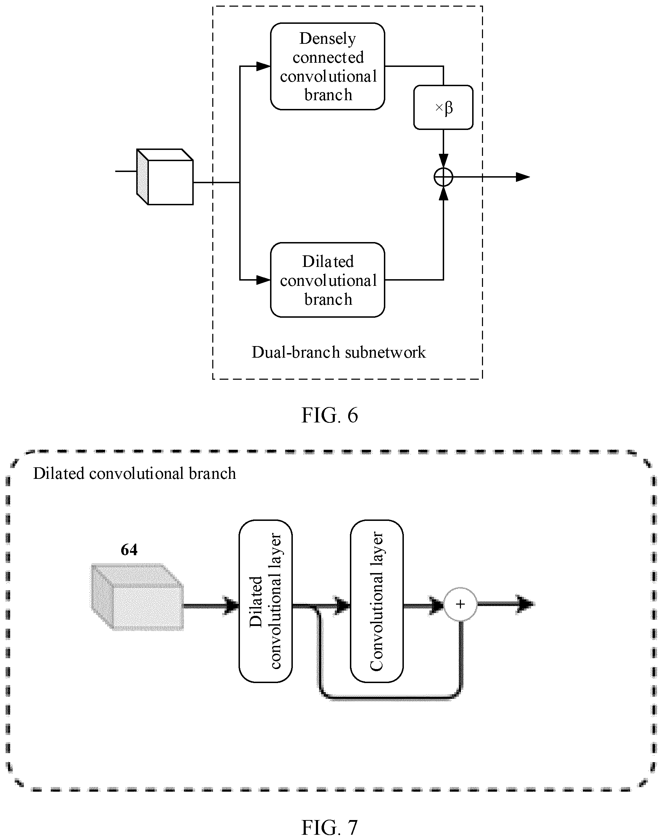

Figure 6 shows a structure of a dual-branch subnetwork. A dual-branch subnetwork includes a densely connected convolutional branch and a dilated convolutional branch. In a dual-branch subnetwork, a feature map (feature map) is separately processed by a densely connected convolutional branch and a dilated convolutional branch, data obtained after the densely connected convolutional branch processing is multiplied by an adjustment coefficient β, and then an obtained result is added to data obtained after the dilated convolutional branch processing. For example, a value of β is 0.2.

The densely connected convolutional branch is implemented by a densely connected convolutional network. For example, a structure of the densely connected convolutional branch is shown in FIG. 5.

The dilated convolutional branch is implemented by a dilated convolutional network. For example, a structure of the dilated convolutional branch is shown in FIG. 7. As shown in FIG. 7, in a dilated convolutional branch, there are two convolutional layers. One is a dilated convolutional layer whose expansion rate is k and whose convolution kernel size is $3 \times 3$. The other is a conventional convolutional layer whose convolution kernel size is $3 \times 3$, where k is a sequence number of the dilated convolutional branch.

As an example, an input image received by a dual-branch subnetwork is a wavelet image $I_W$. It is assumed that a function represented by a densely connected convolutional branch in the dual-branch subnetwork is $f_{dence}$, and a function represented by the dilated convolutional branch is $f_{dila}$. In this case, an output F of the dual-branch subnetwork may be obtained by using the following formula (1):

$$F = \beta \cdot f_{dence}\left(I_W\right) + f_{dila}\left(I_W\right)$$

β represents a balance factor, and is used for balancing weights of output feature maps of the densely connected convolutional branch and the dilated convolutional branch. For example, a value of β is 0.2.

For example, $f_{1 \times 1conv}(I_W)$ obtained after $I_W$ is processed by a convolutional layer with a convolution kernel size of $1 \times 1$ may be added to F, to obtain a final output $O_W = f_{1 \times 1conv}(I_W) + F$ of the dual-branch subnetwork. The output of the dual-branch subnetwork is the wavelet image corresponding to the input image.

In an embodiment in which the first wavelet image of the to-be-processed image is obtained by using formula (1), in step S230, the second wavelet image is inversely transformed into an RGB image by using a related wavelet parameter corresponding to formula (1).

It should be understood that the densely connected convolutional network may obtain local information, and the dilated convolutional network may obtain information in a larger area. Therefore, the densely connected convolutional network and the dilated convolutional network are used together to remove the moire on the wavelet image, so that the densely connected convolutional network and the dilated convolutional network can complement each other, and a receptive field (receptive field) of the network can be enlarged. The receptive field represents a size of an area to which a pixel on a feature map at each layer in a convolutional neural network is mapped in an original image. It should be understood that, by enlarging the receptive field of the network, the moire can be removed in a larger area and to a greater extent, for example, a low-frequency moire can be removed.

Therefore, in this embodiment of this application, the densely connected convolutional network and the dilated convolutional network are used together to remove moires on a wavelet image. This can effectively remove the moire.

Optionally, in step S220, the moire on the first wavelet image is removed by using a dual-branch network. The dual-branch network includes a plurality of dual-branch subnetworks. An output of a former one of two adjacent dual-branch subnetworks is an input of a latter one of the two adjacent dual-branch subnetworks. The dual-branch subnetwork includes the densely connected convolutional network and the dilated convolutional network. An input of the dual-branch subnetwork is an input of the densely connected convolutional network and an input of the dilated convolutional network, and an output of the dual-branch subnetwork is a weighted sum of an output of the densely connected convolutional network and an output of the dilated convolutional network.

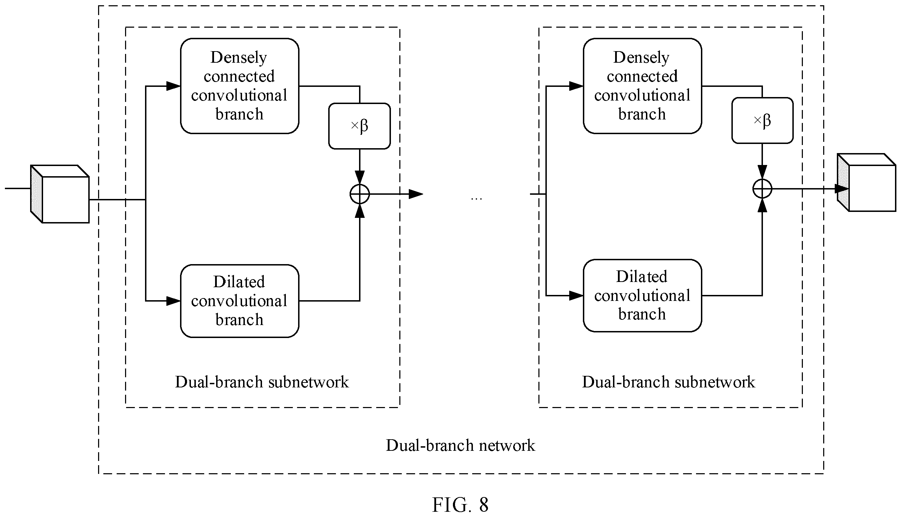

Figure 8 shows a structure of a dual-branch network. The dual-branch network may include one or more dual-branch subnetworks, and each dual-branch subnetwork is shown in FIG. 6. A quantity of dual-branch subnetworks included in the dual-branch network may be determined based on an application requirement in application. This is not limited in this application.

In an embodiment in which the dual-branch network includes a plurality of dual-branch subnetworks, an output of a former one of two adjacent dual-branch subnetworks is an input of a latter one of the two adjacent dual-branch subnetworks. In other words, an output of each dual-branch subnetwork is used as an input of a following dual-branch subnetwork.

Still refer to FIG. 7. In a dilated convolutional branch, there are two convolutional layers. One is a dilated convolutional layer whose expansion rate is $k_{d+2}=k_d+k_{d+1}$ and whose convolution kernel size is $3\times 3$. The other is a conventional convolutional layer whose convolution kernel size is $3\times 3$, where k is a sequence number of the dilated convolutional branch in the dual-branch network ($k_1=1$ and $k_2=2$).

For example, in step S220, the first wavelet image is input into a dual-branch network, and moire removal processing is performed on the first wavelet image by using the dual-branch network, to obtain the second wavelet image.

As an example, an input image received by the dual-branch network is a wavelet image $I_W$. It is assumed that a function represented by a densely connected convolutional branch in a dual-branch subnetwork is $f_{dence,i}$, and a function represented by a dilated convolutional branch is $f_{dila,i}$, where i is a sequence number of the dual-branch subnetwork in the dual-branch network. An output of the ith branch subnetwork may be obtained by using the following formula (2):

$$F_i = \beta \cdot f_{dence,i}\left(F_{i-1}\right) + f_{dila,i}\left(F_{i-1}\right)$$

$F_0=I_W$. When i is equal to 1, that is, an output of a first branch subnetwork is $F_1 = \beta \cdot f_{dence,1}(I_W) + f_{dila,1}(I_W)$.

$\beta$ represents a balance factor, and is used for balancing weights of output feature maps of the densely connected convolutional branch and the dilated convolutional branch. For example, a value of $\beta$ is 0.2.

If the dual-branch network includes N dual-branch subnetworks, an output of the dual-branch network is $F_N$. $f_{1\times 1conv}(I_W)$ obtained after $I_W$ is processed by a convolutional layer with a convolution kernel size of $1\times 1$ may be added to $F_N$, to obtain a final output $O_W = f_{1\times 1conv}(I_W)+F_N$ of the dual-branch network module. The output of the dual-branch subnetwork is the wavelet image corresponding to the input image. For example, a value of N is 7.

In an embodiment in which the first wavelet image of the to-be-processed image is obtained by using formula (2), in step S230, the second wavelet image is inversely transformed into an RGB image by using a related wavelet parameter corresponding to formula (2).

In a process of wavelet transform on the to-be-processed image, a size of a feature map and a quantity of channels are not changed. For example, if an image input by wavelet transform is a feature map of 64 channels, an image output by wavelet transform is also a feature map of 64 channels. In the embodiment of FIG. 8, a feature map transferred between dual-branch subnetworks is also a feature map of 64 channels.

Therefore, in this embodiment of this application, a densely connected convolutional network and a dilated convolutional network are used together to remove moires on a wavelet image, so that the densely connected convolutional network and the dilated convolutional network can complement each other, and a receptive field (receptive field) of the network can be enlarged. This can remove the moire to a greater extent.

Based on the foregoing description, in this embodiment of this application, moire removal is performed in a wavelet domain, to effectively remove moires and reduce loss of original details of an image. In addition, the densely connected convolutional network and the dilated convolutional network are used together to remove the moire on the wavelet image. This can further effectively remove the moire.

Table 1 shows performance of a moire removal method provided in this application and an existing moire removal method on a screen moire public dataset (TIP2018). Among them, a peak signal to noise ratio (peak signal to noise ratio, PSNR) and a structural similarity (structural similarity, SSIM) are selected as evaluation indexes. It can be learned from Table 1 that, compared with the existing moire removal method, the solution provided in this application can achieve better performance on both evaluation indexes.

**Table 1**

|                  | PSNR  | SSIM   |
|------------------|-------|--------|
| Pix2pix          | 25.74 | 0.8253 |
| U-Net            | 26.49 | 0.8640 |
| CFNet            | 26.09 | 0.8625 |
| MuitiscaleNet    | 26.99 | 0.8710 |
| This application | 28.08 | 0.9035 |

Embodiments described in this specification may be independent solutions, or may be combined based on internal logic. All these solutions fall within the protection scope of this application.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein again.

The moire removal method provided in this embodiment of this application may be applied to a computing node of a related device. For example, moire interference can be effectively removed by reconstructing software or hardware of the computing node.

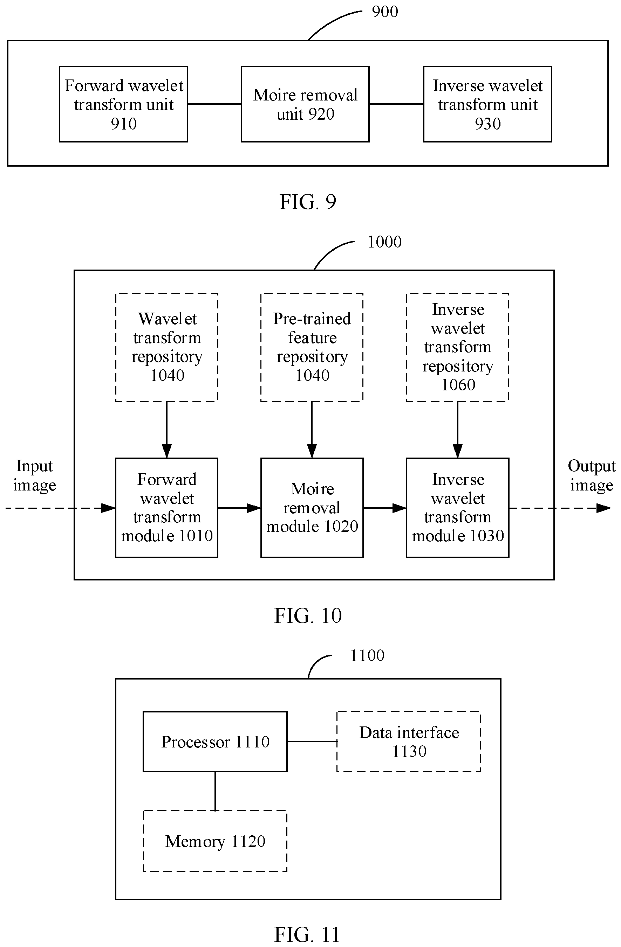

As shown in FIG. 9, an embodiment of this application further provides a data processing apparatus 900. The apparatus 900 includes a wavelet transform unit 910, a moire removal unit 920, and an inverse wavelet transform unit 930.

The wavelet transform unit 1010 is configured to perform wavelet transform on a to-be-processed image to obtain a first wavelet image.

For example, the wavelet transform unit 1010 is configured to perform step S210 in the foregoing embodiment.

Optionally, a type of wavelet transform performed by the wavelet transform unit 910 on the to-be-processed image is Haar wavelet transform.

The moire removal unit 1020 is configured to perform moire removal processing on the first wavelet image to obtain a second wavelet image.

For example, the moire removal unit 1020 is configured to perform step S220 in the foregoing embodiment.

The inverse wavelet transform unit 1030 is configured to perform inverse wavelet transform on the second wavelet image to obtain a repaired image of the to-be-processed image.

For example, the inverse wavelet transform unit 1030 is configured to perform step S230 in the foregoing embodiment.

Optionally, the moire removal unit 1020 is configured to: input the first wavelet image into a densely connected convolutional network, and perform moire removal processing on the first wavelet image by using the densely connected convolutional network, to obtain the second wavelet image.

Optionally, the densely connected convolutional network includes a densely connected convolutional module and an attention module. The attention module is configured to search for a direction of a moire. An output of the densely connected convolutional network is a function of a product of an output of the densely connected convolutional module and an output of the attention module. Details are shown in FIG. 5.

Optionally, the moire removal unit 1020 is configured to: input the first wavelet image into a dual-branch subnetwork, and perform moire removal processing on the first wavelet image by using the dual-branch subnetwork, to obtain the second wavelet image.

The dual-branch subnetwork includes the densely connected convolutional network and a dilated convolutional network. An input of the dual-branch subnetwork is an input of the densely connected convolutional network and an input of the dilated convolutional network, and an output of the dual-branch subnetwork is a weighted sum of an output of the densely connected convolutional network and an output of the dilated convolutional network.

Optionally, the densely connected convolutional network includes a densely connected convolutional module and an attention module. The attention module is configured to search for a direction of a moire. An output of the densely connected convolutional network is a function of a product of an output of the densely connected convolutional module and an output of the attention module. Details are shown in FIG. 5.

Optionally, the moire removal unit 1020 is configured to: input the first wavelet image into a dual-branch network, and perform moire removal processing on the first wavelet image by using the dual-branch network, to obtain the second wavelet image.

The dual-branch network includes a plurality of dual-branch subnetworks. An output of a former one of two adjacent dual-branch subnetworks is an input of a latter one of the two adjacent dual-branch subnetworks.

The apparatus 900 may be integrated into a terminal device, a network device, or a chip.

The apparatus 900 may be deployed on a computing node of a related device, and moire interference can be effectively removed by reconstructing software or hardware. For example, the apparatus 900 may be a moire removal module on the computing node.

As shown in FIG. 10, an embodiment of this application provides a moire removal system 1000. The system 1000 includes a forward wavelet transform module 1010, a moire removal module 1020, and an inverse wavelet transform module 1030.

The forward wavelet transform module 1010 is configured to perform forward wavelet transform on an input image to obtain wavelet images with different frequencies.

For example, the forward wavelet transform module 1010 is configured to perform step S210 in the foregoing embodiment.

The moire removal module 1020 is configured to perform moire removal processing on the wavelet image obtained by the moire removal module 1020, to obtain a wavelet image after moire removal.

For example, the moire removal module 1020 is configured to perform step S220 in the foregoing embodiment.

In an example, a structure of the moire removal module 1020 is shown in FIG. 5.

In another example, a structure of the moire removal module 1020 is shown in FIG. 6.

In still another example, a structure of the moire removal module 1020 is shown in FIG. 8.

For related descriptions, refer to the foregoing descriptions. For brevity, details are not described herein again.

The inverse wavelet transform module 1030 is configured to perform inverse wavelet transform on the wavelet image obtained through processing by the moire removal module 1020, to obtain an output image obtained after moire removal.

For example, the inverse wavelet transform module 1030 is configured to perform step S230 in the foregoing embodiment.

Optionally, as shown in FIG. 10, the system 1000 may further include a wavelet transform repository 1040, a pre-trained feature repository 1040, and an inverse wavelet transform repository 1060.

The wavelet transform repository 1040 is configured to store a type of wavelet transform and a required transform parameter. That is, the wavelet transform repository 1040 is configured to provide a parameter required by the forward wavelet transform module 1010 to perform wavelet transform on an image.

Optionally, the wavelet transform repository 1040 may be located in the forward wavelet transform module 1010.

The inverse wavelet transform repository 1060 is configured to store a type of inverse wavelet transform and a required transform parameter. That is, the inverse wavelet transform repository 1060 is configured to provide a parameter required by the inverse wavelet transform module 1030 to perform wavelet transform on an image.

Optionally, the inverse wavelet transform repository 1060 may be located in the inverse wavelet transform module 1030.

The pre-trained feature repository 1040 is configured to store a sample for training to remove moires from an image. In other words, the pre-trained feature repository 1040 is configured to train the moire removal module 1020, so that the moire removal module 1020 has a function of outputting an image from which the moire is removed.

As shown in FIG. 10, the input image is processed by the moire removal system 1000 provided in this application, to obtain the output image after moire removal. More processing may be subsequently performed on the output image, or an operation such as image target recognition may be performed on the output image.

The system 1000 may be integrated into a terminal device, a network device, or a chip.

The system 1000 may be deployed on a computing node of a related device, and moire interference can be effectively removed by reconstructing software or hardware. For example, the system 1000 may be a moire removal module on the computing node.

As shown in FIG. 11, an embodiment of this application further provides a data processing apparatus 1100. The apparatus 1100 includes a processor 1110. The processor 1110 is coupled to a memory 1120. The memory 1120 is configured to store a computer program or instructions. The processor 1110 is configured to execute the computer program or the instructions stored in the memory 1120, so that the method in the foregoing method embodiments is performed.

Optionally, as shown in FIG. 11, the apparatus 1100 may further include the memory 1120.

Optionally, as shown in FIG. 11, the apparatus 1100 may further include a data interface 1130. The data interface 1130 is configured to transmit data to the outside.

An embodiment of this application further provides a computer-readable medium. The computer-readable medium stores program code to be executed by a device, and the program code is used to perform the method in the foregoing embodiments.

An embodiment of this application further provides a computer program product including instructions. When the computer program product runs on a computer, the computer is enabled to perform the method in the foregoing embodiments.

An embodiment of this application further provides a chip, and the chip includes a processor and a data interface. The processor reads, through the data interface, instructions stored in a memory to perform the method in the foregoing embodiments.

Optionally, in an implementation, the chip may further include the memory and the memory stores the instructions; the processor is configured to execute the instructions stored in the memory, and when the instructions are executed, the processor is configured to perform the method in the foregoing embodiments.

An embodiment of this application further provides an electronic device. The electronic device includes the apparatus 900 or the system 1000 in the foregoing embodiments.

An embodiment of this application further provides a chip. The chip includes a neural network processing unit. The following describes a hardware structure of a chip provided in an embodiment of this application.

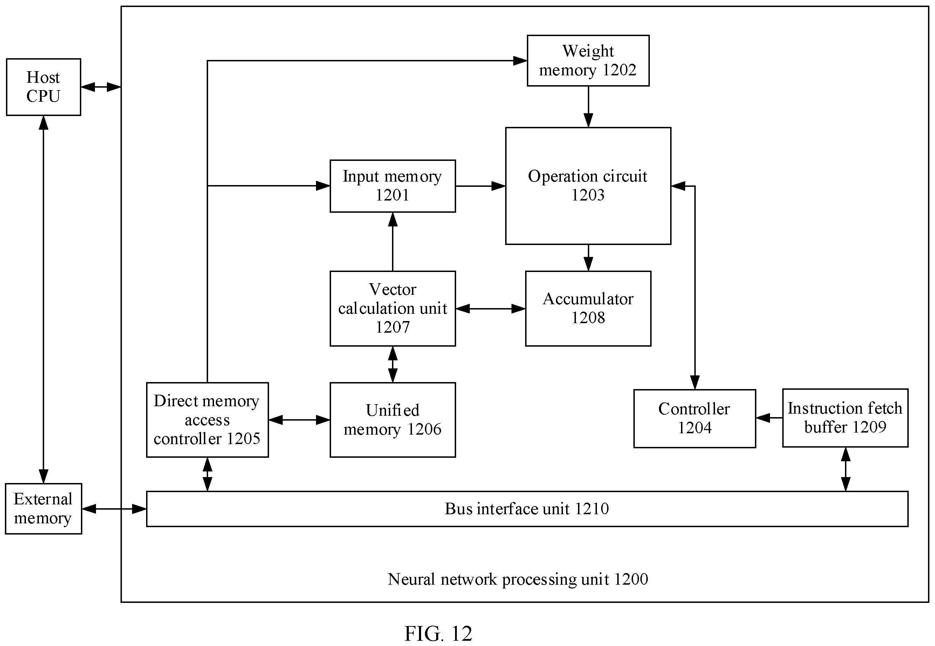

FIG. 12 is a hardware structure of a chip according to an embodiment of this application. The chip includes a neural network processing unit 1200. The chip may be disposed in the apparatus 900 shown in FIG. 9, and is configured to complete calculation work such as wavelet transform, moire removal processing, and inverse wavelet transform of the apparatus 900. The chip may also be disposed in the system 1000 shown in FIG. 10, and is configured to complete training work of the forward wavelet transform module 1010, the moire removal module 1020, and the inverse wavelet transform module 1030, and output a processed output image.

All steps in the method shown in FIG. 2 may be implemented in the chip shown in FIG. 12.

The wavelet transform algorithm shown in FIG. 3 may be implemented in the chip shown in FIG. 12.

The densely connected convolutional network shown in FIG. 5 may be implemented in the chip shown in FIG. 12.

The dual-branch subnetwork shown in FIG. 6 may be implemented in the chip shown in FIG. 12.

The dilated convolutional branch shown in FIG. 7 may be implemented in the chip shown in FIG. 12.

The dual-branch network shown in FIG. 8 may be implemented in the chip shown in FIG. 12.

The neural network processing unit 1200, as a coprocessor, is mounted to a host CPU (Host CPU), and the host CPU assigns a task. A core part of the neural network processing unit 1200 is an operation circuit 1203. A controller 1204 controls the operation circuit 1203 to extract data in a memory (a weight memory 1202 or an input memory 1201) and perform an operation.

In some implementations, the operation circuit 1203 internally includes a plurality of processing units (process engine, PE). In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general-purpose matrix processor.

For example, it is assumed that there is an input matrix A, a weight matrix B, and an output matrix C. The operation circuit 1203 obtains data corresponding to the matrix B from the weight memory 1202, and caches the data on each PE in the operation circuit 1203. The operation circuit 1203 obtains data of the matrix A from the input memory 1201 to perform a matrix operation on the matrix B, and stores an obtained partial result or an obtained final result of the matrix into an accumulator (accumulator) 1208.

A vector calculation unit 1207 may perform further processing such as vector multiplication, vector addition, an exponent operation, a logarithm operation, or value comparison on an output of the operation circuit 1203. For example, the vector calculation unit 1207 may be configured to perform network calculation, such as pooling (pooling), batch normalization (batch normalization), or local response normalization (local response normalization) at a non-convolutional/non-FC layer in a neural network.

In some implementations, the vector calculation unit 1207 can store a processed output vector in a unified memory (or may be referred to as a unified buffer) 1206. For example, the vector calculation unit 1207 may apply a non-linear function to an output of the operation circuit 1203, for example, to a vector of an accumulated value, to generate an activation value. In some implementations, the vector calculation unit 1207 generates a normalized value, a combined value, or both a normalized value and a combined value. In some implementations, the processed output vector can be used as an activation input to the operation circuit 1203, for example, to be used in a subsequent layer in the neural network.

The method shown in FIG. 2 may be performed by 1203 or 1207.

The unified memory 1206 is configured to store input data and output data.

For weight data, a direct memory access controller (direct memory access controller, DMAC) 1205 directly transfers input data in an external memory to the input memory 1201 and/or the unified memory 1206, stores weight data in the external memory in the weight memory 1202, and stores data in the unified memory 1206 in the external memory.

A bus interface unit (bus interface unit, BIU) 1210 is configured to implement interaction between the host CPU, the DMAC, and an instruction fetch buffer 1209 by using the bus.

The instruction fetch buffer (instruction fetch buffer) 1209 connected to the controller 1204, configured to store an instruction used by the controller 1204.

The controller 1204 is configured to invoke the instruction cached in the instruction fetch buffer 1209, to control a working process of the operation accelerator.

In embodiments of this application, the data may be to-be-processed image data.

Usually, the unified memory 1206, the input memory 1201, the weight memory 1202, and the instruction fetch buffer 1209 each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Unless otherwise defined, all technical and scientific terms used in this specification have same meanings as that usually understood by a person skilled in the art of this application. The terms used in the specification of this application are merely for the purpose of describing specific embodiments, and are not intended to limit this application.

It should be further understood that, "first", "second", "third", "fourth", and various numbers in this specification are merely used for differentiation for ease of description, and are not intended to limit the scope of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electronic, mechanical, or another form.

The units described as separate parts may or may not be physically separate, and parts displayed as units may or may not be physical units, that is, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a universal serial bus flash disk (USB flash disk, UFD) (UFD may also be referred to as a USB flash drive or a flash memory), a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A moire removal method, comprising:

    performing wavelet transform on a to-be-processed image to obtain a first wavelet image;
    performing moire removal processing on the first wavelet image to obtain a second wavelet image; and
    performing inverse wavelet transform on the second wavelet image to obtain a repaired image of the to-be-processed image.

2. The method according to claim 1, wherein the performing moire removal processing on the first wavelet image to obtain a second wavelet image comprises:
    inputting the first wavelet image into a densely connected convolutional network, and performing moire removal processing on the first wavelet image by using the densely connected convolutional network, to obtain the second wavelet image.

3. The method according to claim 2, wherein the inputting the first wavelet image into a densely connected convolutional network, and performing moire removal processing on the first wavelet image by using the densely connected convolutional network, to obtain the second wavelet image comprises:

    inputting the first wavelet image into a dual-branch subnetwork, and performing moire removal processing on the first wavelet image by using the dual-branch subnetwork, to obtain the second wavelet image; and
    the dual-branch subnetwork comprises the densely connected convolutional network and a dilated convolutional network, an input of the dual-branch subnetwork is an input of the densely connected convolutional network and an input of the dilated convolutional network, and an output of the dual-branch subnetwork is a weighted sum of an output of the densely connected convolutional network and an output of the dilated convolutional network.

4. The method according to claim 3, wherein the inputting the first wavelet image into a dual-branch network, and performing moire removal processing on the first wavelet image by using the dual-branch network, to obtain the second wavelet image comprises:

    inputting the first wavelet image into a dual-branch network, and performing moire removal processing on the first wavelet image by using the dual-branch network, to obtain the second wavelet image; and
    the dual-branch network comprises a plurality of dual-branch subnetworks, and an output of a former one of two adjacent dual-branch subnetworks is an input of a latter one of the two adjacent dual-branch subnetworks.

5. The method according to any one of claims 2 to 4, wherein the densely connected convolutional network comprises a densely connected convolutional module and an attention module, the attention module is configured to search for a direction of a moire, and the output of the densely connected convolutional network is a function of a product of an output of the densely connected convolutional module and an output of the attention module.

6. The method according to any one of claims 1 to 5, wherein a type of wavelet transform performed on the to-be-processed image is Haar Haar wavelet transform.

7. A data processing apparatus, comprising:

   a wavelet transform unit, configured to perform wavelet transform on a to-be-processed image to obtain a first wavelet image;
   a moire removal unit, configured to perform moire removal processing on the first wavelet image to obtain a second wavelet image; and
   an inverse wavelet transform unit, configured to perform inverse wavelet transform on the second wavelet image to obtain a repaired image of the to-be-processed image.

8. The apparatus according to claim 7, wherein the moire removal unit is configured to: input the first wavelet image into a densely connected convolutional network, and perform moire removal processing on the first wavelet image by using the densely connected convolutional network, to obtain the second wavelet image.

9. The apparatus according to claim 8, wherein the moire removal unit is configured to: input the first wavelet image into a dual-branch subnetwork, and perform moire removal processing on the first wavelet image by using the dual-branch subnetwork, to obtain the second wavelet image; and
   the dual-branch subnetwork comprises the densely connected convolutional network and a dilated convolutional network, an input of the dual-branch subnetwork is an input of the densely connected convolutional network and an input of the dilated convolutional network, and an output of the dual-branch subnetwork is a weighted sum of an output of the densely connected convolutional network and an output of the dilated convolutional network.

10. The apparatus according to claim 9, wherein the moire removal unit is configured to: input the first wavelet image into a dual-branch network, and perform moire removal processing on the first wavelet image by using the dual-branch network, to obtain the second wavelet image; and
   the dual-branch network comprises a plurality of dual-branch subnetworks, and an output of a former one of two adjacent dual-branch subnetworks is an input of a latter one of the two adjacent dual-branch subnetworks.

11. The apparatus according to any one of claims 8 to 10, wherein the densely connected convolutional network comprises a densely connected convolutional module and an attention module, the attention module is configured to search for a direction of a moire, and the output of the densely connected convolutional network is a function of a product of an output of the densely connected convolutional module and an output of the attention module.

12. The apparatus according to any one of claims 7 to 11, wherein a type of wavelet transform performed by the wavelet transform unit on the to-be-processed image is Haar Haar wavelet transform.

13. A data processing apparatus, comprising:

   a memory, configured to store a program; and
   a processor, configured to execute the program stored in the memory, wherein when the program stored in the memory is executed, the processor is configured to perform the method according to any one of claims 1 to 6.

14. A computer-readable storage medium, wherein the computer-readable medium stores program code to be executed by a device, and when the program code is executed, the device performs the method according to any one of claims 1 to 6.

15. A chip, comprising at least one processor and a data interface, wherein
   the at least one processor is configured to invoke and run, by using the data interface, a computer program stored in a memory, to enable the chip to perform the method according to any one of claims 1 to 6.

FIG. 1

S210: Perform wavelet transform on a to-be-processed image to obtain a first wavelet image

S220: Perform moire removal processing on the first wavelet image to obtain a second wavelet image

S230: Perform inverse wavelet transform on the second wavelet image to obtain a repaired image of the to-be-processed image

FIG. 2

FIG. 3

FIG. 4

FIG. 5

FIG. 6

FIG. 7

FIG. 8

900

| Forward wavelet transform unit 910 | Moire removal unit 920 | Inverse wavelet transform unit 930 |

FIG. 9

1000

| Wavelet transform repository 1040 | Pre-trained feature repository 1040 | Inverse wavelet transform repository 1060 |

Input image

| Forward wavelet transform module 1010 | Moire removal module 1020 | Inverse wavelet transform module 1030 |

Output image

FIG. 10

1100

| Processor 1110 | Data interface 1130 |

Memory 1120

FIG. 11

EP 4 109 393 A1

FIG. 12

Host CPU

External memory

Neural network processing unit 1200

Bus interface unit 1210

Instruction fetch buffer 1209

Controller 1204

Weight memory 1202

Operation circuit 1203

Accumulator 1208

Input memory 1201

Vector calculation unit 1207

Unified memory 1206

Direct memory access controller 1205

## INTERNATIONAL SEARCH REPORT

| International application No. |
|---|
| **PCT/CN2021/076840** |

**A. CLASSIFICATION OF SUBJECT MATTER**

G06T 5/00(2006.01)i; G06K 9/00(2006.01)i

According to International Patent Classification (IPC) or to both national classification and IPC

**B. FIELDS SEARCHED**

Minimum documentation searched (classification system followed by classification symbols)

G06T; G06K

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE, ISI: 图像, 去除, 消除, 摩尔纹, 莫尔条纹, 叠纹, 莫列波纹, 水状波纹, 小波, 卷积网络; image, remove, moiré, demoire, wavelet, convolutional network

**C. DOCUMENTS CONSIDERED TO BE RELEVANT**

| Category* | Citation of document, with indication, where appropriate, of the relevant passages | Relevant to claim No. |
|---|---|---|
| PX | CN 111369450 A (HUAWEI TECHNOLOGIES CO., LTD.) 03 July 2020 (2020-07-03) claims 1-15 | 1-15 |
| X | YUAN, Shanxin et al. "AIM 2019 Challenge on Image Demoireing: Methods and Results" *2019 IEEE/CVF International Conference on Computer Vision Workshop,* 28 October 2019 (2019-10-28), pages 3539-3541, and figure 11 | 1, 2, 6-8, 12-15 |
| A | CN 108389164 A (SHENZHEN SUNCO VISION TECHNOLOGY CO., LTD.) 10 August 2018 (2018-08-10) entire document | 1-15 |
| A | CN 109816599 A (XIDIAN UNIVERSITY) 28 May 2019 (2019-05-28) entire document | 1-15 |
| A | US 2018027149 A1 (IIX INC.) 25 January 2018 (2018-01-25) entire document | 1-15 |
| A | CN 108154487 A (TIANJIN UNIVERSITY) 12 June 2018 (2018-06-12) entire document | 1-15 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 April 2021** | **29 April 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/076840** |

| C. | DOCUMENTS CONSIDERED TO BE RELEVANT | |
|---|---|---|
| Category* | Citation of document, with indication, where appropriate, of the relevant passages | Relevant to claim No. |
| A | CN 110287969 A (DALIAN UNIVERSITY OF TECHNOLOGY) 27 September 2019 (2019-09-27)<br>     entire document | 1-15 |

Form PCT/ISA/210 (second sheet) (January 2015)

**INTERNATIONAL SEARCH REPORT**
Information on patent family members

International application No.

**PCT/CN2021/076840**

| Patent document cited in search report | | | Publication date (day/month/year) | Patent family member(s) | | | Publication date (day/month/year) |
|---|---|---|---|---|---|---|---|
| CN | 111369450 | A | 03 July 2020 | None | | | |
| CN | 108389164 | A | 10 August 2018 | None | | | |
| CN | 109816599 | A | 28 May 2019 | CN | 109816599 | B | 29 December 2020 |
| US | 2018027149 | A1 | 25 January 2018 | US | 10015373 | B2 | 03 July 2018 |
| | | | | WO | 2016009493 | A1 | 21 January 2016 |
| | | | | KR | 102171232 | B1 | 28 October 2020 |
| | | | | CN | 106664359 | A | 10 May 2017 |
| | | | | CN | 106664359 | B | 27 September 2019 |
| | | | | JP | 6243030 | B2 | 06 December 2017 |
| | | | | KR | 20170031096 | A | 20 March 2017 |
| | | | | EP | 3171588 | A1 | 24 May 2017 |
| | | | | JP | WO2016009493 | A1 | 27 April 2017 |
| | | | | TW | 201606748 | A | 16 February 2016 |
| | | | | TW | I653887 | B | 11 March 2019 |
| | | | | EP | 3171588 | B1 | 15 April 2020 |
| CN | 108154487 | A | 12 June 2018 | CN | 108154487 | B | 09 February 2021 |
| CN | 110287969 | A | 27 September 2019 | None | | | |

Form PCT/ISA/210 (patent family annex) (January 2015)

**EP 4 109 393 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010108660